Europäisches Patentamt

European Patent Office

Office européen des brevets

(19)

(11) Publication number: **0 096 770**
A1

(12) # EUROPEAN PATENT APPLICATION

(21) Application number: 83105105.7

(22) Date of filing: 24.05.83

(51) Int. Cl.³: **C 08 F 10/00,** C 08 F 4/64

(30) Priority: 25.05.82 JP 89481/82

(43) Date of publication of application: 28.12.83
Bulletin 83/52

(84) Designated Contracting States: BE DE FR GB IT NL

(71) Applicant: SUMITOMO CHEMICAL COMPANY, LIMITED,
15 Kitahama 5-chome Higashi-ku, Osaka-shi Osaka-fu
(JP)

(72) Inventor: Shiga, Akinobu, 7-6, Hoshigoecho, Niihama-shi
(JP)
Inventor: Sasaki, Toshio, 6-517, Ikkucho-2-chome,
Niihama-shi (JP)
Inventor: Naito, Yukio, 1353-4-235, Shiizu, Ichihara-shi
(JP)
Inventor: Kojima, Junpei, 3-438, Kitashinmachi,
Niihama-shi (JP)

(74) Representative: Vossius Vossius Tauchner Heunemann
Rauh, Siebertstrasse 4 P.O. Box 86 07 67,
D-8000 München 86 (DE)

(54) Process for producing olefin polymers.

(57) Polymerization of at least one olefin in the presence of a catalyst system comprising.

(A) a solid catalyst component obtained by the contact reaction between

(a) a magnesium compound of the formula $Mg(OR^1)_nX_{2-n}$, in which $OR^1$ is an alkoxy group or an aralkoxy group or an aryloxy group, X is a halogen atom and n is a number satisfying $0.5 \leq n \leq 2$, and

(b) a titanium compound of the formula $Ti(OAr)_mX_{4-m}$, in which OAr is an aryloxy group, X is a halogen atom, and m is a number satisfying $0 < m < 1$, and

(B) an organoaluminum compound as an activating agent.

u.Z.: S 453 EP
Case: A7759-05
Sumitomo Chemical Co., Ltd.
Osaka, Japan

May 24, 1983

VOSSIUS · VOSSIUS · ...

0096770

- 1 -

# PROCESS FOR PRODUCING OLEFIN POLYMERS

This invention relates to a process for producing olefin polymers by homopolymerizing or copolymerizing olefins with a high-activity catalyst system using a novel solid catalyst component.

It is well known that in producing crystalline olefin polymers, there is used a so-called Ziegler-Natta catalyst system comprising a compound of a transition metal of Groups IV to VI of the periodic table and a metal of Groups I to III or an organometallic compound thereof. In the commercial production of polymers from $\alpha$-olefins such as propylene and butene-1, titanium trichloride compositions, or titanium tetrachloride or titanium trichloride deposited on a magnetisum-containing halide carrier are used as catalyst. In conventional processes, there is formed an amorphous polymer as byproduct beside a highly stereoregular olefin polymer having a high commercial utility value. The amorphous polymer is of little commercial utlity value and adversely affects the mechanical properties of the commercial products such as film, fiber, and other products manufactured from the olefin polymers by processing. Further, the formation of amorphous polymers brings about industrial disadvantages such that it causes a material loss of the monomers and necessitates the installation of an additional facility for the removal of those amorphous polymers. It would be very advantageous to the industry if it becomes possible to reduce the formation of amorphous polymers to nil or minimum, if any.

On the other hand, since the retention of catalyst residues by the olefin polymers offers various problems concerning the stability and processability and other properties of the polymers it becomes necessary to install an additional facility for the purpose of removal of the catalyst residues and stabilization of the polymer. The above disadvantages can be minimized by the increase in catalytic activity which is expressed in terms of the weight of polymer formed per unit weight of the catalyst. If the facility for the removal of catalyst residues becomes dispensed with, it would be of help to the curtailment of production cost for olefin polymers.

For the aforementioned purposes, various attempts have heretofore been made to improve the polymerization catalyst. Many proposals have been made regarding the supported catalysts comprising transition metal compounds carried on the supports. It was found that inorganic compounds such as oxides, hydroxides, chlorides, and carbonates of metals or silicon, mixtures thereof, and double salts thereof are effective supports. It is reported that among the above compounds, magnesium compounds are most effective and that highly active catalysts are prepared by using as the supports magnesium halides (Japanese Patent Publication Nos. 12,105/64, 41,676/72, and so on) and alkoxy- or aryloxy-magnesium

- 3 -

0096770

[Japanese Patent Publication Nos. 34,098/71 and 42,137/72; Japanese Patent Application "Kokai" (Laid-open) Nos. 119,982/74, 147,688/77, 2,580/78, 39,991/78, 144,006/80, 34,707/81, and others].

According to the above patent literature, in the supporting step of preparing the supported catalysts, there are used in the reaction titanium halides such as titanium tetrachloride and titanium tetrabromide; dialkoxytitanium dichlorides such as $TiCl_2(O\text{-}iso\text{-}C_3H_7)_2$ and $TiCl_2(OC_2H_5)_2$; and vanadium oxytrichloride. The activity of the resulting catalysts is comparatively high but not sufficiently high. When used in the polymerization of $\alpha$-olefins having 3 or more carbon atoms, such a catalyst does not give a polymer having a sufficiently high stereoregularity to meet the requirement for such a polymer.

The present inventors carried out an extensive study to develop a catalyst system which has a higher activity for olefin polymerization and, in addition, is capable of producing a polymer having an excellent stereoregularity from $\alpha$-olefins of 3 or more carbon atoms. As the result, it was found that it is possible to obtain a solid catalyst component having a high activity for Ziegler catalyst system for use in olefin polymerization and capable of producing a highly stereoregular polymer from an olefin having 3 or more carbon atoms, by the contact reaction between a specific magnesium compound represented by the general formula $Mg(OR^1)_nX_{2-n}$ (wherein

$OR^1$ is an alkoxy group, an aralkoxy group, or an aryloxy group, X is a halogen atom, and n is a number satisfying $0.5 \leq n \leq 2$) and a specific titanium compound. Based on the above finding, the present invention has been accomplished.

It is an object of the present invention to provide a solid catalyst component having a high activity for Ziegler catalyst system for use in olefin polymerization.

It is another object of the present invention to provide olefin polymers having a high stereoregularity and a process for producing the same.

Other object and advantages of the present invention will be apparent from the following descriptions.

According to this inventoin, there is provided a process for producing olefin polymers which comprises polymerizing at least one olefin in the presence of a catalyst system comprising

(A)    a solid catalyst component obtained by the contact reaction between

(a)    a magnesium compound of the formula $Mg(OR^1)_n X_{2-n}$, in which $OR^1$ is an alkoxy group or an aralkoxy group or an aryloxy group, X is a halogen atom, and n is a number satisfying $0.5 \leq n \leq 2$, and

(b)    a titanium compound of the formula $Ti(OAr)_m X_{4-m}$, in which OAr is an aryloxy group, X is a halogen atom, and m is a number satisfying

$0 < m < 1$, and

(B)    an organoaluminum compound as an activating agent.

The process of the present invention has the following advantages:

(1) In olefin polymerization, the catalytic activities per unit weight of the solid catalyst component and per titanium atom are both high.  As a consequence, the step of removing catalyst residues from the polymer is unnecessary, because the polymer contains very little amounts of those transition metal (titanium) residues and halogen-containing residues which cause deterioration of polymer products in physical properties such as color and thermal stability, and give rise to corosiveness and foaming of the polymer.

(2)  In polymerization of $\alpha$-olefins having 3 or more carbon atoms, the catalyst system exhibits also a high activity and, in addition, gives a polymer of sufficiently high crystallinity.  The formation of amorphous polymers of low commercial value is so little that it is possible to omit the step of removing amorphous polymers which, when retained in the polymer, cause deterioration of the polymer in mechanical properties and enhance the blocking property of film manufactured from the polymer.

(3)  The step of manufacturing the solid catalyst component is very simple, and a solid catalyst component having a high activity as well as a high stereospecifity may be obtained at a low cost.

(4) The molecular weight of the polymer is easily controlled and it is possible to reduce the amount of hydrogen used in the polymerization to regulate the molecular weight.

The magnesium compounds (a) represented by the general formula $Mg(OR^1)_nX_{2-n}$ are used each alone or in mixtures of two or more, irrespective of the method by which they are obtained. These magnesium compounds are prepared in known ways. For instance, they are prepared by reacting a Grignard compound represented by the general formula $R^2MgX$ (where $R^2$ is an alkyl or aryl group and X is a halogen atom) and/or a dialkyl- or diarylmagnesium compound represented by the general formula $R^3_2Mg$ (where $R^3$ is an alkyl or aryl group) with at least one compound (compound G) selected from alcohols, phenols, ketones, aldehydes and esters including carboxylate esters, orthosilicate esters, and orthoformate esters; by the simultaneous contact of metallic magnesium with both a halogenated hydrocarbon and a compound containing an alkoxy, aralkoxy, or aryloxy group; by the partial halogenation of $Mg(OR)_2$ with a halogenation agent; or by reacting $MgX_2$ with $Mg(OR)_2$. It is also possible to use a magnesium compound having both an alkoxy group and an aryloxy group prepared by the exchange reaction between a magnesium compound of the formula $Mg(OR^4)X$ (where $OR^4$ is an alkoxy group and X is a halogen atom) and a phenol or a compound containing an aryloxy group, said magnesium compound being obtained by reacting a Grignard compound with an alcohol.

Among the above-mentioned methods for synthesis of magnesium compounds (a), preferable one is a method comprising reacting a Grignard compound represented by the general formula $R^2MgX$ and/or a dialkyl (or diaryl) magnesium compound represented by the general formula $R^3_2Mg$ with a compound G, and as the compound G, a preferable one is selected from alcohols, phenols, orthosilicate esters and orthoformate esters.

As examples of individual Grignard compounds, mention may be made of organomagnesium compounds such as ethylmagnesium chloride, n-propylmagnesium chloride, n-butylmagnesium chloride, isoamylmagnesium chloride, allylmagnesium chloride, n-butylmagnesium bromide, and ethylmagnesium iodide. Examples of dialkylmagnesium compounds are organomagnesium compounds such as diethylmagnesium, di-n-propylmagnesium, di-n-butylmagnesium, di-n-hexylmagnesium, n-butylethylmagnesium, and diphenylmagnesium.

The organomagnesium compounds are prepared and used in the form of a solution or suspension in ethers such as diethyl ether, di-n-propyl ether, di-n-butyl ether, diisoamyl ether, and tetrahydrofuran or in mixtures of these ethers with hydrocarbons such as hexane, heptane, octane, cyclohexane, benzene, toluene, and xylene. Ethers, particularly di-n-butyl ether and diisoamyl ether, are preferred. Likewise these ethers are preferred also in preparing magnesium compounds (a) by simultaneously contacting metallic magnesium with both a halogenated hydrocarbon and a compound containing an alkoxy, aralkoxy, or aryloxy group. The ethers are used in an amount of 0.1 to 10, preferably 0.5 to 5, moles for 1 mole of the organomagnesium compound or metallic magnesium.

In preparing the magnesium compound (a), the compound G is reacted, as such or after diluted with the above-mentioned solvent, with the organomagnesium compound. The molar ratio of the organomagnesium compound to the compound G is from 1:10 to 10:1, preferably from 1:2 to 2:1. For instance, the reaction is carried out by adding dropwise a heptane solution of compound G to an ether solution of organomagnesium compound or vice versa. The reaction temperature is from -50° to 150°C, preferably from 0° to 100°C. The reaction time is 10 minutes or more, preferably from 30 minutes to 10 hours. The reaction mixture containing the magnesium compound (a) thus formed is left standing and the supernatant is removed. The residue is thoroughly washed with a purified inert hydrocarbon such as pentane, hexane, heptane, octane, benzene, xylene, cyclohexane, methylcyclohexane, or decahydronaphthalene. The washed magnesium compound (a) is used in the next reaction step after drying or without drying.

In order to display the characteristic features of the present invention such that a polymerizatoin activity for olefins is very high, and a polymer having a high stereoregularity is obtained in the polymerization of olefins having 3 or more carbon atoms, the above-mentioned magnesium compounds (a) contain preferably 3 - 35% by weight, particularly preferably 5 - 25% by weight of ether compounds.

The magnesium compounds (a) of the formula $Mg(OR^1)_n X_{2-n}$ for use in the present process are those in which $OR^1$ is an alkoxy group such as methoxy, ethoxy, n-propoxy, isopropoxy, n-butoxy, isobutoxy, sec-butoxy, tert-butoxy, n-pentyloxy, isopentyloxy, sec-pentyloxy, or tert-pentyloxy group; those in which $OR^1$ is an aralkoxy group such as benzyloxy, phenylethoxy, p-methylbenzyloxy, p-ethylbenzyloxy, p-isopropylbenzyloxy, p-tert-butylbenzyloxy, p-chlorobenzyloxy, p-bromophenyl-ethoxy, p-methoxyphenylethoxy, o-methylphenylethoxy, m-chlorophenylethoxy, or phenylbutoxy group; and those in which $OR^1$ is an aryloxy group such as phenoxy, p-methylphenoxy, p-ethylphenoxy, p-isopropylphenoxy, p-tert-butylphenoxy, p-phenylphenoxy, 2-naphthyloxy, p-chlorophenoxy, p-bromophenoxy, p-iodophenoxy, p-methoxyphenoxy, p-ethoxyphenoxy, p-phenoxyphenoxy, 4-methyl-2-tert-butylphenoxy, o-methylphenoxy, o-tert-butylphenoxy, o-phenylphenoxy, 1-naphthyloxy, o-chlorophenoxy, o-methoxyphenoxy, o-phenoxyphenoxy, m-methylphenoxy, or m-chlorophenoxy group.

- 10 -                                    0096770

The magnesium compounds (a) are used in the contact reaction with the titanium compound (b) in the succeeding step. For the purpose of further improving the stereoregularity of the resulting polymer, the magnesium compound (a) can be treated with an electron donating compound before contacting with the titanium compound (b). The above three components can also be simultaneously contacted with one another. The electron donating compounds suitable for use include amines, amides, ethers, esters, ketones, nitriles, phosphines, phosphites, and sulphides. Of these, esters are preferred. Suitable esters are aliphatic carboxylate esters, alicyclic carboxylate esters, and aromatic carboxylate esters. Among these esters, olefin-carboxylate esters and aromatic monocarboxylate esters are preferred, and the latter is most preferred. Examples are methyl benzoate, ethyl benzoate, and ethyl p-anisate. In view of their effect of improving the stereoregularity and the polymerization activity, the electron donating compounds are used in an amount of $10^{-5}$ to 0.1 mole, preferably $5 \times 10^{-4}$ to 0.02 mole, for 1 g of the magnesium compound (a). The contact between the magnesium compound and the electron donating compound can be effected in any of the known ways such as, for example, contact in a slurry form or contact by grinding in a ball mill.  In forming a slurry, aliphatic hydrocarbons such as pentane, hexane, heptane, and octane, aromatic hydrocarbons such as benzene, toluene, and xylene, and alicyclic hydrocarbons such as cyclohexane and cyclopentane may be used as diluents. The diluent is used in an amount of 3 to 100 ml, preferably 5 to 20 ml, for 1 g of the magnesium compound. The reaction temperature is -50° to 150°C, preferably 0° to 100°C.  The reaction time is 10 minutes or more, preferably 30 minutes to 3 hours.  After having been contacted with the electron donating compound, the magnesium compound may be used, after washing with an inert hydrocarbon solvent or without washing, in the next step of the contact reaction with a titanium compound.

The titanium compounds (b) used in the process of this invention are those which contain in their molecule a bond between the titanium atom and an aryloxy group of the formula -OAr and a bond between the titanium atom and a halogen atom, and which may be mixtures of two or more of such compounds.  Although the titanium atom in the above compounds may be in any valence state of 2 to 4, a titanium compound containing a tetravalent titanium atom is preferred.  Suitable titanium compounds are aryloxytitanium halides represented by the general formula $Ti(OAr)_m X_{4-m}$, wherein OAr is an aryloxy group, X is a halogen atom, and m is a number defined by the formula $0 < m < 1$.  The halogen may be chlorine, bromine or iodine, though chlorine is preferable. Suitable aryloxy groups (-OAr) are phenoxy group ($-OC_6H_5$) and substituted phenoxy groups. The substituents of the latter groups may be hydrocarbon radicals such as alkyl and aryl groups; oxygen-containing organic groups such as alkoxy, aryloxy, acyl or ester groups; sulfur-containing organic groups such as alkylthio and arylthio groups; and nitrogen-containing organic groups such as amino, alkylamino, arylamino, nitro, and cyano groups. The substituted phenoxy groups may have two or more substituents. Preferred substituents are hydrocarbon radicals, halogens, alkoxy groups, and aryloxy groups. As examples of particular aryloxy groups (-OAr) in $Ti(OAr)_mX_{4-m}$, mention may be made of phenoxy, p-methylphenoxy, p-ethylphenoxy, p-isopropylphenoxy, p-tert-butylphenoxy, p-phenylphenoxy, 2-naphthyloxy, p-chlorophenoxy, p-bromophenoxy, p-iodophenoxy, p-methoxyphenoxy, p-ethoxyphenoxy, p-phenoxyphenoxy, 4-methyl-2-tert-butylphenoxy, o-methylphenoxy, o-tert-butylphenoxy, o-phenylphenoxy, 1-naphthyloxy, o-chlorophenoxy, o-methoxyphenoxy, o-phenoxyphenoxy, m-methylphenoxy, and m-chlorophenoxy groups. Suitable titanium compounds are those of the formula $Ti(OAr)_mX_{4-m}$ in which m is in the range defined preferably by the formula $0 < m < 1$, more preferably $0.05 \leq m \leq 0.9$ most preferably by the formula $0.1 \leq m \leq 0.8$. In other words, preferable titanium compounds are mixtures of $Ti(OAr)X_3$ and $TiX_4$ in ratios in the range of from 0.1:0.9 to 0.8:0.2. By using the above specific aryloxytitanium halides in the contact reaction, it is possible to obtain a catalyst of markedly higher activity than when corresponding titanium halides are used.

The titanium compound (b) is synthesized by the known methods. In one method, it is synthesized by the substitution reaction between a halogen-containing titanium compound and a corresponding phenolic compound. When both components are mixed, the reaction takes place generally with evolution of hydrogen halide. The reaction should be carried until substantial completion which can be ascertained by the determination of the intensity of the absorption band of hydroxyl group in the infrared absorption spectrum of the reaction mixture. As an example, when 0.1 mole of titanium tetrahalide and 0.05 mole of p-cresol are mixed at 120°C, vigorous evolution of hydrogen chloride continues for about 30 minutes and there is formed a titanium compound having an average composition of $(4-CH_3-C_6H_4O)_{0.5} \cdot TiCl_{3.5}$ which corresponds to an equimolar mixture of $(4-CH_3-C_6H_4O)TiCl_3$ and $TiCl_4$. In another method, the titanium compound (b) is synthesized by the disproportionation reaction between a halogen-containing titanium compound and an orthotitanate ester of a corresponding phenolic compound. For instance, the reaction of 0.39 mole of titanium tetrachloride with 0.01 mole of tetra-p-methylphenoxytitanium gives a titanium compound having an average composition of $(4-CH_3-C_6H_4O)_{0.1}TiCl_{3.9}$ which corresponds to a 1:9 (by mole) mixture of $(4-CH_3-C_6H_4O)TiCl_3$ and $TiCl_4$. As examples of halogen-containing titanium compounds, mention may be made of titanium tetrahalides such as titanium tetrachloride and titanium tetrabromide and halogenated titanates such as methoxytitanium trichloride and ethoxytitanium trichloride. Of these compounds, titanium halides, particularly titanium tetrachloride, are preferred.

The contact reaction between the magnesium compound (a), which has been treated with an electron donating compound or not, and the titanium compound (b) is carried out by known methods such as the slurry method, in which the magnesium compound is added to a solution of the titanium compound to form a slurry; the impregnation method, in which the magnesium compound is impregnated with the titanium compound; and the milling method, in which both components are milled in a ball mill or a vibration mill. The solution containing a titanium compound can be a liquid titanium compound itself or a solution in a suitable solvent. Suitable solvents are aromatic hydrocarbons such as monochlorobenzene and toluene and halogenated aliphatic hydrocarbons such as 1,2-dichloroethane. In the slurry metod, the titanium compound (b) is used in an amount of 1 to 100 ml, preferably 3 to 50 ml, for 1 g of the magnesium compound (a). The contact reaction is carried out at a temperature of 0° to 150°C. The reaction time is several minutes or more, preferably 30 minutes to 3 hours. After completion of the contact reaction, the reaction product is preferably washed thoroughly with an inert solvent to obtain the solid catalyst component (A) according to this invention.

The activating agents (B) used in the process of this invention are organometallic compounds of aluminum. It is preferable to use organoaluminum compounds represented by the general formula $R^5{}_i AlY_{3-i}$, wherein $R^5$ is a straight or branched chain alkyl group having 1 to 8 carbon atoms, an alicyclic hydrocarbon radical, or an aromatic hydrocarbon radical, Y is a halogen or hydrogen atom, and i is a number defined by the formula $2 \leqq i \leqq 3$. It is also possible to use mixtures of two or more of these organoaluminum compounds. A mixture of an organoaluminum compound having an Al-X linkage, X being a halogen atom, and an organoaluminum compound having no such linkage is especially preferred. An example of such a mixture is that of a trialkylaluminum and a dialkylaluminum halide. The molar ratio of the titanium atom in the solid catalyst component for olefin polymerization to the activating agent can be selected from the wide range of from 10:1 to 1:1000, but a preferable range is from 2:1 to 1:600.

In the process of this invention, olefins are homo- or co-polymerized essentially in the presence of the solid catalyst component (A) and the activating agent (B). In the polymerization of an α-olefin of 3 or more carbon atoms, however, in order to further improve stereoregularity of the polymer a known electron donating compound can be added to the polymerization system as the third component in addition to the components (A) and (B). By the use of electron donating compounds, the stereoregularity is generally improved whereas the catalyst activity is decreased. Suitable electron donating compounds are esters, especially ortho acid esters such as ethyl orthoformate and ethyl orthobenzoate, orthosilicate esters such as tetraethoxysilane, and aromatic monocarboxylate esters. Examples of aromatic monocarboxylate esters are ethyl benzoate, ethyl p-anisate, and methyl p-methylbenzoate. The molar ratio of the activating agent (B) to the electron donating compound is in the range of from 1:0.01 to 1:1, preferably from 1:0.1 to 1:0.6.

The polymerization according to this invention can be carried out at a temperature in the broad range of from -30° to 200°C. However, a preferable temperature is in the range of from 0° to 100°C, because the rate of polymerization decreases at temperatures below 0°C, while a highly stereoregular polymer of an

- 17 -

0096770

α-olefin of 3 or more carbon carbon atoms is difficulty obtainable at temperatures exceeding 100°C. The polymerization pressure is not critical, but a pressure in the range of from 3 to about 100 atmospheres is preferable in view of the ease of operation and economy. The polymerization is carrid out either continuously or batchwise. The slurry polymerization by use of an inert hydrocarbon such as propane, butane, pentane, hexane, heptane, or octane, the liquid phase polymerization without using a solvent, and the gas phase polymerization are also possible. As non-limitative examples of olefins suitable for the present polymerization process, mention may be made of ethylene, propylene, butene-1, pentene-1, hexene-1, 3-methylpentene-1, and 4-methylpentene-1. Both of the homopolymerization and the copolymerization are possible according to this invention. A copolymer is obtained by polymerizing a mixture of 2 or more olefins in the presence of the catalyst system of this invention. The present process is also adaptable to the hetero block copolymerization in which the polymerization is carried out in 2 or more stages.

The invention is further illustrated below in detail with reference to Examples, but the invention is not limited thereto.

Example 1

(A)   Synthesis of magnesium compound:

Into a flask flushed with argon, was charged 0.2 mole (83 ml of the di-n-butyl ether solution) of n-butylmagnesium chloride.  To the solution heated at 30°C, was added dropwise with stirring over a period of 1.5 hours 0.2 mole of tetraethoxysilane.  After allowing the mixture to react for an additional hour, the reaction mixture was cooled to room temperature and the supernatant was removed through a glass filter.  The residue was washed five times with 80 ml of n-heptane and dried under reduced pressure to yield a powder of white solid product represented by the formular $Mg(OC_2H_5)Cl$ which contained 6.4% by weight of di-n-butyl ether.

(B)   Treatment of the solid product with electron donating compound:

Into a 200-ml flask flushed with argon, were charged 12 g of the white powder obtained above in (A) and 120 ml of n-heptane to form a slurry.  To the slurry, was added with stirring 3.6 ml of ethyl benzoate.  The mixture was allowed to react at 25°C with stirring for 1 hour.  The supernatant was removed through a glass filter.  The residue was washed by stirring it in 60 ml of n-heptane for 5 minutes and removing the supernatant through a glass filter.  The washing treatment was repeated four times and the residue was dried under reduced pressure to yield 12.3 g of a treated solid.

(C) Synthesis of titanium compound:

Into a 200-ml flask flushed with argon, were charged 37 ml of titanium tetrachloride, 110 ml of monochlorobenzene, and 9.5 g of phenol. The mixture was heated at 120°C to allow the reaction to proceed with evolution of hydrogen chloride gas. After the mixture had been kept at the same temperature for 1 hour, 1 ml of the reddish black reaction mixture was taken out and tested by infrared absorption spectroscopy to ascertain the disappearance of the absorption originated in the stretching vibration of a phenolic hydroxyl group. There was obtained a solution containing a liquid titanium compound having an average composition represented by the formula $Ti(OC_6H_5)_{0.3}Cl_{3.7}$.

(D) Preparation of solid catalyst component:

To the solution containing the titanium compound obtained above in (C), was added 5.2 g of the treated solid obtained in (B). The mixture was stirred at 120°C for 1 hour to allow the contact reaction to proceed. After completion of the reaction, the supernatant was removed through a glass filter at 120°C. To the residue, was added 40 ml of monochlorobenzene. The mixture was stirred at 120°C for 5 minutes and the supernatant was removed through a glass filter. The residue was stirred in 40 ml of n-heptane at 90°C for 5 minutes and the supernatant was removed through a glass filter. This washing treatment was repeated 4 times. The residue was then dried under reduced pressure to yield a solid catalyst component.

(E)   Polymerization of propylene:

Into a 5-liter stainless steel autoclave of the stirring type, which had been flushed with argon, were charged 0.405 g of triethylaluminum, 0.440 g of diethylaluminum chloride, 0.584 g of ethyl p-anisate, and 32.7 mg of the solid catalyst component prepared above in (D). Hydrogen was introduced into the autoclave to a partial pressure of 0.72 kg/cm$^2$. Into the autoclave, was charged 1.3 kg of liquified propylene. The autoclave was heated at 65°C (internal temperature) for 1 hour to allow the polymerization to proceed. After completion of the polymerization, the unreacted monomer was purged and the polymer formed was mixed with 100 ml of methanol to decompose the catalyst. The polymer was collected by filtraction and dried at 60°C under reduced pressure to obtain 281 g of polypropylene. The yield of polymer in g per g of the solid catalyst component (hereinafter referred to briefly as pp/cat) was 8590. Six hours' Soxhlet extraction with boiling heptane showed that the content of insoluble portion (hereinafter referred to as IY) was 96.7% by weight.

Comparative Example 1

A solid catalyst component was prepared in the same manner as in Example 1, except that there were used 4.6 g of the treated solid obtained in (B) of Example 1, 33 ml of titanium tetrachloride in place of the solution containing the titanium compound having an average composition represented by the formula $Ti(OC_6H_5)_{0.3}Cl_{3.7}$, and no monochrolobenzene. Using the solid catalyst component thus prepared, propylene was polymerized in a manner similar to that in (E) of Example 1. The pp/cat was 2090 and the IY was 96.0% by weight.


Example 2

(A) Synthesis of magnesium compound:

A mixture of 0.1 mole of phenol and 100 ml of n-heptane was charged into a flask flushed with argon. To the mixture heated at 60°C, was added dropwise with stirring over a period of 1.5 hours 100 ml of a di-n-butyl ether solution containing 0.1 mole of n-butylmagnesium chloride. The resulting mixture was further allowed to react for an additional hour at 60°C. The reaction mixture was then cooled to room temperature and left standing. After removal of the supernatant, the residue was washed 5 times with 50 ml of n-heptane and dried under reduced pressure to yield a powder of white solid product represented by the formula $Mg(OC_6H_5)Cl$, which contained 15.4% by weight of di-n-butyl ether.

(B) Preparation of solid catalyst component:

A treated solid was obtained in a manner similar to that in (B) of Example 1, using 7.0 g of the magnesium compound obtained above in (A), 70 ml of n-heptane, and 5.3 ml of ethyl benzoate. Then, a solution containing a titanium compound having an average composition represented by the formula $(4\text{-}CH_3\text{-}C_6H_4O)_{0.5}TiCl_{3.5}$ was obtained in a manner similar to that in (C) of Example 1, using 20 ml of titanium tetrachloride, 40 ml of monochlorobenzene, and 9.5 ml of p-cresol. A solid catalyst component was prepared in a manner similar to that in (D) of Example 1 by adding the above-noted treated solid to the titanium compound-containing solution.

(C)  Polymerization of propylene:

Propylene was polymerized in a manner similar to that in (E) of Example 1, using the solid catalyst component prepared above in (B), and pp/cat was 11,030 and IY was 96.7% by wieght.

Comperative Example 2

A solid catalyst component was prepared in a manner similar to that in Example 2, using 3.5 g of the treated solid obtained in (B) of Example 2, 40 ml of monochlorobenzene, and 20 ml of titanium tetrachloride in place of the titanium compound having an average composition represented by the formula $(4\text{-}CH_3\text{-}C_6H_4O)_{0.5}TiCl_{3.5}$. Using the solid catalyst component, propylene was polymerized in a manner similar to that in (E) of Example 1. As the result, pp/cat was 2650, and IY was 96.0% by weight.

Example 3

A treated solid was obtained as in Example 2.

A solution containing a titanium compound having an average composition represented by the formula $(4\text{-}CH_3\text{-}C_6H_4O)_{0.1}TiCl_{3.9}$ was obtained in a manner similar to that in (C) of Example 1, using 40 ml of titanium tetrachloride, 80 ml of monochlorobenzene, and 3.8 ml of p-cresol. A solid catalyst component was prepared in a manner similar to that in (D) of Example 1 by adding 6.9 g of the treated solid obtained above to the titanium compound-containing solution. Using the solid catalyst component, propylene was polymerized in a manner similar to that in (E) of Example 1. As the result, pp/cat was 5780, and IY was 96.3% by weight.

Example 4

A solution containing a titanium compound of an average composition represented by the formula $(4\text{-}CH_3\text{-}C_6H_4O)_{0.8}TiCl_{3.2}$ was obtained in a manner similar to that in (C) of Example 1, using 30 ml of titanium tetrachloride, 60 ml of monochlorobenzene, and 22.8 ml of p-cresol. A solid catalyst component was prepared in a manner similar to that in (D) of Example 1, using the titanium compound-containing solution and 5.2 g of the treated solid obtained in Example 3. Using the solid catalyst component, propylene was polymerized in a manner similar to that in (E) of Example 1. As the result, pp/cat was 4120 and IY was 96.1% by weight.

Comparative Example 3

A solution containing a titanium compound of an average composition represented by the formula $(4\text{-}CH_3\text{-}C_6H_4O)TiCl_3$ was obtained in a manner similar to that in (C) of Example 1, using 20 ml of titanium tetrachloride, 40 ml of monochlorobenzene, and 19.0 ml of p-cresol. A solid catalyst component was prepared in a manner similar to that in (D) of Example 1, using the titanium compound-containing solution and 3.5 g of the treated solid obtained in Example 3. Using the solid catalyst component, propylene was polymerized in a manner similar to that in (E) of Example 1. As the result, pp/cat was 2790 and IY was 96.1% by weight.

WHAT IS CLAIMED IS:

1.      A process for producing olefin polymers which comprises polymerizing at least one olefin in the presence of a catalyst system comprising

(A)     a solid catalyst component obtained by the contact reaction between

   (a)     a magnesium compound of the formula $Mg(OR^1)_nX_{2-n}$, in which $OR^1$ is an alkoxy group or an aralkoxy group or an aryloxy group, X is a halogen atom and n is a number satisfying $0.5 \leqq n \leqq 2$, and

   (b)     a titanium compound of the formula, $Ti(OAr)_mX_{4-m}$, in which OAr is an aryloxy group, X is a halogen atom, and m is a number satisfying $0 < m < 1$, and

(B)     an organoaluminum compound as an activating agent.

2.      A process according to Claim 1, wherein the magnesium compound (a) is produced by reacting an organomagnesium compound represented by the general formula $R^2MgX$ and/or $R^3_2Mg$ (where $R^2$ and $R^3$ each is an alkyl or aryl group and X is a halogen atom) with at least one compound selected from alcohols, phenols, ketons, aldehydes, carboxylate esters, orthosilicate esters, and orthoformate esters in a solvent comprising an ether compound or a mixture of an ether compound and a hydrocarbon compound.

3.      A process according to Claim 2, wherein the amount of the ether compound is 0.1 to 10 times by mole based on the organomagnesium compound.

4.      A process according to Claim 2, wherein the ether compound is an aliphatic or cyclic ether having 4 to 10 carbon atoms.

5.      A process according to Claim 2, wherein the produced magnesium compound (a) contains 3 - 35% by weight of an ether compound.

6.      A process according to Claim 1, wherein the solid catalyst component is obtained by contact treatment of the magnesium compound (a) with an electron donor, followed by contact reaction with the titanium compound (b), or by contact reaction of the magnesium compound (a) with a mixture of the titanium compound (b) and an electron donor.

7.      A process according to Claim 6, wherein the ester is an ester of aromatic monocarboxylic acids.

8.      A process according to Claim 6, wherein the amount of the electron donor used is $10^{-5}$ to 0.1 mole per gram of the magnesium compound (a).

9.      A process according to Claim 1, wherein the halogen in the titanium compound (b) is chlorine.

10.      A process according to Claim 1, wherein the aryloxy group in the titanium compound (b) is a phenoxy group and/or a substituted phenoxy group.

11.      A process according to Claim 1, wherein the titanium compound (b) is represented by the formula $Ti(OAr)_m X_{4-m}$, wherein OAr is an aryloxy group, X is a halogen atom and m is a number satisfying $0.05 \leq m \leq 0.9$.

12.      A process according to Claim 11, wherein m is a number satisfying $0.1 \leq m \leq 0.8$.

13.      A process according to Claim 1, wherein said solid catalyst component is obtained by the contact reaction which is carried out by slurrying the magnesium compound (a) in a liquid-form or solution-form titanium compound (b).

14.      A process according to Claim 13, wherein the amount of the titanium compound (b) per gram of the magnesium compound (a) is 1 to 100 ml.

15.      A process according to Claim 1, wherein the organoaluminum compound is represented by the formula $R_i^5 AlY_{3-i}$, wherein $R^5$ is a $C_{1-8}$ straight or branched chain alkyl or alicyclic or aromatic hydrocarbon group, Y is halogen or hydrogen and i is a number satisfying $2 \leq i \leq 3$.

16.      A process according to Claim 1, wherein the molar ratio of the titanium atom in the solid catalyst component to the activating agent is 2:1 to 1:600.

17.      A process according to Claim 1, wherein the catalyst system comprises the solid catalyst component (A), the activating agent (B) and the electron donor (C).

18.      A process according to Claim 17, wherein the electron donor is an ester of aromatic monocarboxylic acids.

19.      A process according to Claim 17, wherein the molar ratio of the activating agent to the electron donor is 10:1 to 1:1.

0096770

20.     A solid catalyst component for olefin polymerization obtained by the contact reaction between

(a)     a magnesium compound of the formula $Mg(OR^1)_n X_{2-n}$, in which $OR^1$ is an alkoxy group or an aralkoxy group or an aryloxy group, X is a halogen atom and n is a number satisfying $0.5 \leq n \leq 2$, and

(b)     a titanium compound of the formula, $Ti(OAr)_m X_{4-m}$, in which OAr is an aryloxy group, X is a halogen atom, and m is a number satisfying $0 < m < 1$.

21.     A solid catalyst component for olefin polymerization according to Claim 20, wherein the magnesium compound (a) is produced by reacting an organomagnesium compound represented by the general formula $R^2 MgX$ and/or $R_2^3 Mg$ (where $R^2$ and $R^3$ each is an alkyl or aryl group and X is a halogen atom) with at least one compound selected from alcohols, phenols, ketons, aldehydes, carboxylate esters, orthosilicate esters, and orthoformate esters in a solvent comprising an ether compound or a mixture of an ether compound and a hydrocarbon compound.

22.     A solid catalyst component for olefin polymerization according to Claim 21, wherein the amount of the ether compound is 0.1 to 10 times by mole based on the organomagnesium compound.

23.     A solid catalyst component for olefin polymerization according to Claim 21, wherein the ether compound is an aliphatic or cyclic ether having 4 to 10 carbon atoms.

24.    A solid catalyst component for olefin polymerization according to Claim 21, wherein the produced magnesium compound (a) contains 3 - 35% by weight of an ether compound.

25.    A solid catalyst component for olefin polymerization according to Claim 20, wherein the solid catalyst component is obtained by contact treatment of the magnesium compound (a) with an electron donor, followed by contact reaction with the titanium compound (b), or by contact reaction of the magnesium compound (a) with a mixture of the titanium compound (b) and an electron donor.

26.    A solid catalyst component for olefin polymerization according to Claim 25, wherein the ester is an ester of aromatic monocarboxylic acids.

27.    A solid catalyst component for olefin polymerization according to Claim 25, wherein the amount of the electron donor used is $10^{-5}$ to 0.1 mole per gram of the magnesium compound (a).

28.    A solid catalyst component for olefin polymerization according to Claim 20, wherein the halogen in the titanium compound (b) is chlorine.

29.    A solid catalyst component for olefin polymerization according to Claim 20, wherein the aryloxy group in the titanium compound (b) is a phenoxy group and/or a substituted phenoxy group.

30.     A solid catalyst component for olefin polymerization according to Claim 20, wherein the titanium
compound (b) is represented by the formula $Ti(OAr)_mX_{4-m}$,
wherein OAr is an aryloxy group, X is a halogen atom and
m is a number satisfying $0.05 \leq m \leq 0.9$.

31.     A solid catalyst component for olefin polymerization according to Claim 30, wherein m is a number
satisfying $0.1 \leq m \leq 0.8$.

32.     A solid catalyst component for olefin polymerization according to Claim 20, wherein the solid
catalyst component is obtained by the contact reaction
which is carried out by slurrying the magnesium compound
(a) in a liquid-form or solution-form titanium compound
(b).

33.     A solid catalyst component for olefin polymerization according to Claim 32, wherein the amount
of the titanium compound (b) per gram of the magnesium
compound (a) is 1 to 100 ml.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | PATENTS ABSTRACTS OF JAPAN, vol. 6, no. 135(C-115)(1013), 22nd July 1982<br><br>& JP - A - 57 59908 (SUMITOMO KAGAKU KOGYO K.K.) 10-04-1982 * Whole abstract *<br><br>--- | 1,6,9-12,15,16,20,28-31 | C 08 F 10/00<br>C 08 F 4/64 |
| Y | PATENTS ABSTRACTS OF JAPAN, vol. 6, no. 135(C-115)(1013), 22nd July 1982<br><br>& JP - A - 57 59913 (SUMITOMO KAGAKU KOGYO K.K.) 10-04-1982 * Abstract *<br><br>--- | 1,6,9-12,15,16,20,28-31 | |
| Y | GB-A-1 559 194 (MONTEDISON AND MITSUI)<br>* Claims 1,3,21; page 5, lines 21-26 *<br><br>--- | 1 | TECHNICAL FIELDS SEARCHED (Int..Cl. 3)<br><br>C 08 F |
| Y | GB-A-1 576 642 (MITSUI)<br>* Claims 1,2,4; page 6, lines 17-32, 45-52; page 7, lines 30-37 *<br><br>--- | 1 | |
| D,X | GB-A-1 552 728 (MITSUI)<br>* Page 11, comparative example 1 * & JP - A - 78 039 991<br><br>----- | 2-5 | |

The present search report has been drawn up for all claims

| Place of search<br>THE HAGUE | Date of completion of the search<br>15-09-1983 | Examiner<br>WEBER H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82